Europäisches Patentamt

European Patent Office

Office européen des brevets

(19)

(11) Publication number: **0 181 994**
A1

## (12) EUROPEAN PATENT APPLICATION

(21) Application number: 85104382.8

(22) Date of filing: 11.04.85

(51) Int. Cl.⁴: **G 11 B 23/033**

(30) Priority: 23.10.84 JP 159170/84 U

(71) Applicant: Shin-Shin Shokai Co., Ltd., 17-25, Mita 2-chome, Minato-ku Tokyo (JP)

(43) Date of publication of application: 28.05.86 Bulletin 86/22

(72) Inventor: Kitada, Katsuichi, 2-9, Naka-magome 1-chome, Ohta-ku Tokyo (JP)

(84) Designated Contracting States: CH DE FR GB IT LI NL SE

(74) Representative: Gille, Christian, Dipl.-Ing. et al, Türk & Gille Bruckner Strasse 20, D-4000 Düsseldorf 13 (DE)

(54) Book-type case for storing microfloppy disks.

(57) A book-type case (10) for storing microfloppy disks comprises a book-type case body partitioned into a number of compartments (20) and a like number of housing frames (30) for accommodating microfloppy disks pivotally supported on the side walls (23) of the compartments.

EP 0 181 994 A1

## BACKGROUND OF THE INVENTION

### Field of the Invention

The present invention relates to a book-type case for storing microfloppy disks, and more particularly, to a book-type case for storing 3.5-inch microfloppy disks (microdisks) housed in hard plastic packages.

### Description of the Prior Art

The rapid advances made in integrated circuit technology during recent years have led to the appearance of very compact computers. As their external memories, these machines do not use the hard disks employed with large CPUs but instead use what are known as floppy disks, a kind of maganetic disk for storing data magnetically. The floppy disk is a thin magnetic sheet made of a pliable marerial and is easily affected by magnetic fields and temperature. Because of this, the floppy disk is used as housed in a simple plastic pakage designed to shield the magnetic disk from the exterior. Thanks to progress in electronics as well as the advent and rapid spread of highly compact computers, the size of the floppy disk has also become smaller. Today there is available a floppy disk which measures only 3.5 inches in diameter but which has a memory capacity on a par with the conventional 8- and 5-inch floppy disks. This newly developed 3.5-inch floppy disk, popularly known as a microfloppy disk, is a small, thin sheet of magnetic material which is enclosed in a hard plastic package in order to protect it from the influences of extraneous magnetic fields, high temperatures and external pressures. In spite of the wide use being enjoyed by these 3.5-inch microfloppy disks covered with hard plastic, however, there has not yet appeared a case for storing them in an efficient, convenient and safe manner.

## SUMMARY OF THE INVENTION

It is an object of the present invention to provide a novel book-type case for storing microfloppy disks.

It is another object of this invention to provide an easily portable

2

0181994

book-type case specially designed for storing 3.5-inch microfloppy disks contained in hard plastic packages which enables the microfloppy disks to be inserted and removed as desired and assures their secure, rattle-free storage in a manner that guarantees their safety from inadvertently falling out of the case.

. The book-type case for storing microfloppy disks according to this invention is internally divided into a number of compartments (six, for example) and each compartment has pivotally supported therein a housing frame for securely holding a microfloppy disk in rattle-free condition.     As a result, the book-type case is able to efficiently store a number of microfloppy disks at one time.

The invention will be better understood and the other objects and advantages thereof will be more apparent from the following detailed description of a preferred embodiment with reference to the accompanying drawings.

## BRIEF DESCRIPTION OF THE DRAWINGS

Figure 1 is a perspective view of an embodiment of the book-type case for storing microfloppy disks according to the invention shown with the cover open.

Figure 2A is a fragmentary perspective view of a book-type case according to this invention including an inset showing how a housing frame is releasably retained in a housing section.

Figure 2B is a fragementary perspective view similar to Figure 2B showing the housing frame in the raised position.

Figure 3A is a perspective view of the housing frame of the embodiment of Figure 1 showing the intitial stage of insertion of a microfloppy disk.

Figure 3B is a perspective view similar to Figure 3A showing the microfloppy disk in the fully inserted condition.

Figure 4 is a perspective view similar to Figure 2A showing a microfloppy disk stored in a compartment of the book-type case.

## ~DESCRIPTION OF THE PREFERRED EMBODIMENTS

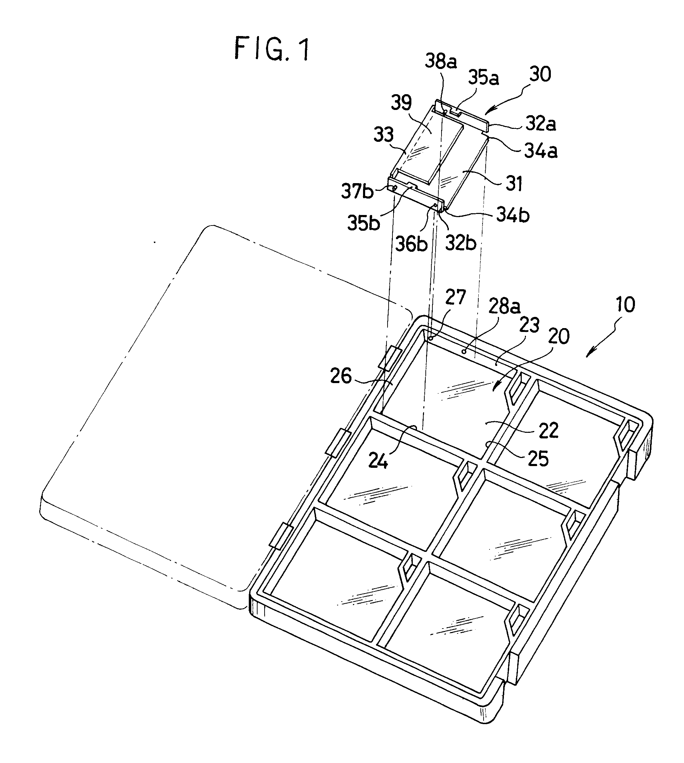

Figure 1 is an overall perspective view showing a book-type case for

3

storing microfloppy disks in accordance with this invention. This book-type case consists of a book-type case body 10 hinged to open in the form of a book, a plurality of compartments 20 and a plurality of housing frames 30 accommodated in the compartments. The compartments 20 are formed as recesses in that half of the book-type case body 10 that corresponds to the pages of a real book with the cover open. (This half will be referred to as the "inside half" hereinafter.) Each compartment is a rectangular recess defined by a floor 22, upper and lower walls 23, 24, and right and left walls 25, 26. The upper and lower walls 23, 24 are provided at points near the corners of the compartment 20 with cylindrical engagement depressions 27 and at their middle portions with hemispherical engagemant depressions 28a, 28b.

In the present embodiment, the inside half of the book-type case body 10 is provided with six compartments 20. The number of compartments is, however, not limited to six and, depending on the size of the book-type case body 10, can be either fewer or more than six.

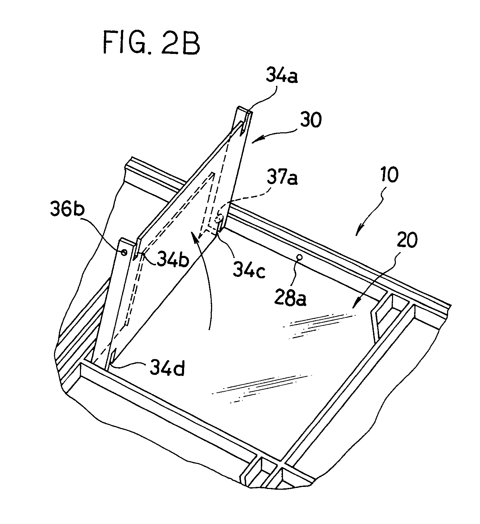

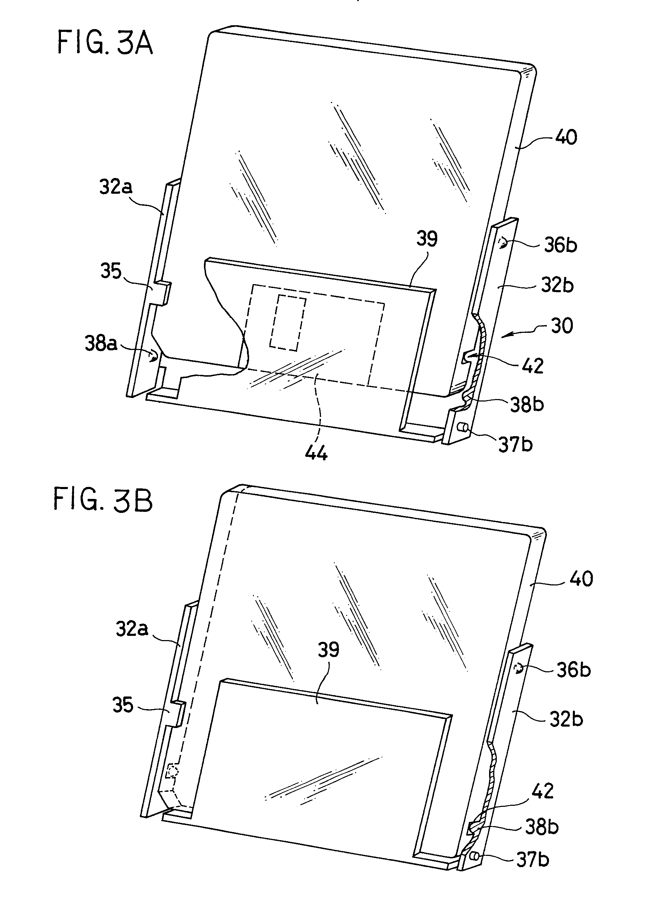

The housing frame 30 is an approximately box-shaped frame formed of synthetic resin and consisting of a back 31, upper and lower walls 32a, 32b, and a bottom wall 33. The housing frame 30 is accommodated in the compartment with the back 31 adjacent the floor 22, the upper and lower walls 32a, 32b adjacent the upper and lower walls 23, 24, and the bottom wall 33 adjacent the left wall 26. As shown in Figure 2B, the back 31 has rectangular notches 34a, 34b, 34c, 34d formed at its four corners. As shown in Figure 3, the upper and lower walls 32a and 32b are provided on their outer surfaces toward the right ends thereof with hemispherical engagement projections 32a, 32b and toward the left ends thereof with cylindrical engagement projections 37a, 37b. The cylindrical engagement projections 37a, 37b of the housing frame 30 fit into the cylindrical engagement depressions 27 of the compartment 20, whereby the housing frame 30 is pivoted with respect to the upper and lower walls 23, 24 of the compartment 20 to be freely rotatable. The upper and lower walls 32a, 32b, are further provided on the inner surface toward the left ends thereof (as

4

0181994

seen in Figure 1) with retaining projections 38a, 38b. Moreover, the upper and lower walls 32a, 32b are also provided with rectangular projections 35a, 35b extending perpendicularly inward from the center of the top edges thereof.

The bottom wall 33 stands perpendicularly on the back 31, separated at its ends from the upper and lower walls 32a, 32b by the width of the notches 34c, 34d.

A support piece 39 is further provided to project from the middle part of the top edge of the bottom wall and extend in parallel with the back 31 to a point beyond the rectangular projections 35a, 35b.

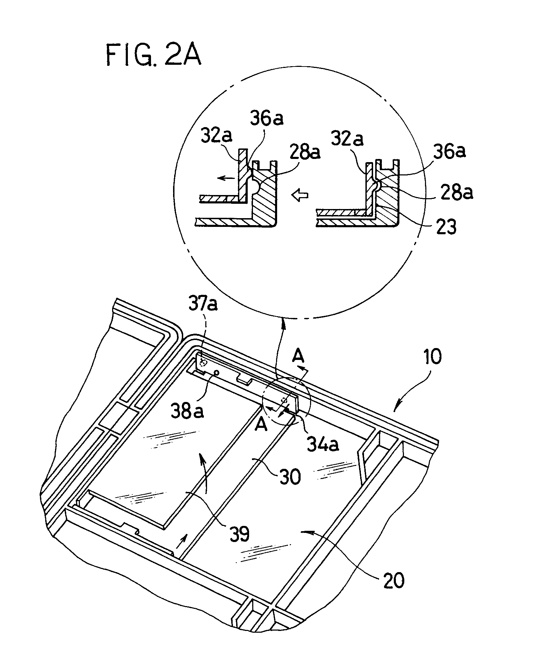

When a microfloppy disk is to be stored, the book-type case 10 ia opened as shown in Figure 1 and the housing frame 30 fitted in the compartment 20 is raised by pulling obliquely upward on support piece 39. At this time, only a slight force is sufficient for dislodging the hemispherical engagement projections 36a, 36b of the housing frame from the hemispherical engagement depressions 28a, 28b of the compartment 20. More specifically, the housing frame 20 is integrally formed of a synthetic resin exhibiting resilience and, moreover, is provided with the notches 34a, 34b at the leading end of its back 31. Therefore, when the leading edge of the support piece 39 of the housing frame 30 is pulled obliquely upward, the right ends of the upper and lower walls 32a, 32b bend sightly inward (see inset of Figure 2A) and the engagement projections 36a, 36b are freed from the engagement depressions 28a, 28b.

Further, after the engagement projections 36a, 36b disengage from the engagement depressions 28a, 28b, since the engagement projections 37a, 37b of the housing frame 30 are pivotally engaged in the engagement depressions 27, the housing frame 30 rotates about the engagement projections 37a, 37b and rises to the position shown in Figure 2B, making it easy to insert the microfloppy disk.

Next, as shown in Figure 3, with the housing frame 30 rotated to the upright position, a 3.5-inch microfloppy disk 40 enclosed in a hard cover is inserted therein with its shutter 44 facing downward. The shutter 44 is for closing the opening through which the microfloppy disk is accessed during data read and write operations. In the housing frame 30 the space defined by the back 31, the upper and lower walls 32a, 32b, the bottom wall 33 and the support piece 39 is somewhat larger in height, width and depth than the height, width and thickness of the microfloppy disk 40. Therefore, the microfloppy disk can be easily inserted into the housing frame 30 as guided along the back 31, the upper and lower walls 32a, 32b, and the support piece 39. On the other hand, however, the distance between the tips of the retaining projections 38a, 38b provided on the inside surfaces of the upper and lower walls 32a, 32b toward the ends thereof closer to the bottom wall 33 is shorter than the width of the microfloppy disk 40 so that the leading end of the microfloppy disk 40 strikes against the retaining projections 38a, 38b. Once the leading end of the microfloppy disk has made contact with the retaining projections 38a, 38b, if it is then pressed inward with increased force, it will, as shown in Figure 3B, push the retaining projections 38a, 38b laterally and proceed deeper into the housing frame 30 until the retaining projections 38a, 38b snap into notches 42 in the microfloppy disk 40. As a result the microfloppy disk proceeds to the full depth of the housing frame 30 and is retained therein.

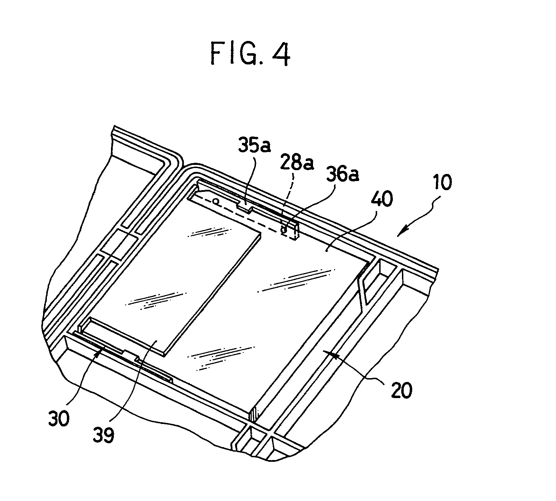

After the microfloppy disk 40 has been inserted into the housing frame 30, the housing frame 30 is rotated for storage in the compartment 20 as shown in Figure 4. More precisely, the housing frame 30 containing the microfloppy disk 40 is rotated downwardly about the cylindrical engaging projections 37a, 37b until the hemispherical engagement projections 36a, 36b engage with the hemispherical engagement depressions 28a, 28b. (The state of engagement is shown in the inset of Figure 2A.) As the housing frame 30 is integrally formed of resilient synthetic resin and is further provided with the notches 34a, 34b at opposite ends of the free end of the back 31, rotation of the housing frame 30 into the compartment 20 causes the free end portions of the upper and lower walls 32a, 32b to bend slightly inward, allowing the hemispherical engagement projections 36a, 36b to slide along the inner surfaces of the upper and lower walls 23, 24 until they engage with the hemispherical engagement depressions 28a, 28b, thus retaining the housing frame 30 as stored within the compartment

6

20. As a consequence, the microfloppy disk 40 is retained in rattle-free condition within the housing frame 30 and is further securely retained within the compartment 20 by the engagement of the hemispherical engagement projections 36a, 36b with the hemispherical engagement depressions 28a, 28b.

The book-type case according to this invention is thus able to fulfill the very important function of safely storing microfloppy disks in such a manner that they can be freely carried about and be removed from the book-type case at will. Moreover, the arrangement according to this invention enables the insertion of the microfloppy disk 40 into the housing frame 30 and the stowing of the housing frame 30 in the compartment 20 to be carried out with the upmost ease. The operation of removing the microfloppy disk from the housing frame 30 is equally simple.

Being of the construction described in the foregoing, the book-type case for storing microfloppy disks according to this invention has a high level of practical utility in that it enable 3.5-inch microfloppy disks encased in hard plastic cases (packages) to be put in and out of storage with utmost ease and further enables a large number of such microfloppy disks to be simultaneously stored in safe condition such that they are protected against impacts, which are known to be a major cause for degradation in the performance of microfloppy disks.

CLAIMS

1. In a case for storing microfloppy disks of the type enclosed within a hard package, an improved book-type case for storing microfloppy disks comprising a book-type case body, a number of compartments formed by partitioning the interior of one half of the book-type case body, and a like number of housing frames for accommodating microfloppy disks pivotally supported on the side walls of said compartments.

2. A book-type case for storing microfloppy disks according to claim 1 wherein said housing frames are pivotally supposrted within said compartments by projections on the outer surfaces of the side walls of said housing frame which engage with depressions on the inner surfaces of the walls of said compartments.

3. A book-type case for storing microfloppy disks according to claim 1 further comprising second projections on the outer surfaces of the side walls of said housing frame and second depressions on the inner surfaces of said compartments, said second projections releasably engaging with said second depressions to retain said housing frames within said compartments.

4. A book-type case for storing microfloppy disks according to claim 1 wherein said housing frame comprises a back having notches formed at its four corners, upper and lower walls and a bottom wall, pivotal projections and engaging projections formed on the outer surfaces of said upper and lower walls at positions near said bottom wall and far from said bottom wall, respectively, retaining projections provided on the inside surfaces of said upper and lower walls at positions near said bottom wall, rectangular projections extending inwardly from the upper edges of said upper and lower walls at the middle part thereof, and a support piece extending from the central region of the top of said bottom wall in parallel with said back.

5. A book-type case for storing microfloppy disks in accordance with claim 3 wherein said second projections and said second depressions are both hemispherical in shape.

0181994

1/5

FIG. 1

FIG. 2A

FIG. 2B

FIG. 3A

FIG. 3B

FIG. 4

0181994

European Patent Office

**EUROPEAN SEARCH REPORT**

| | DOCUMENTS CONSIDERED TO BE RELEVANT | | EP 85104382.8 |
|---|---|---|---|

| Category | Citation of document with indication, where appropriate, of relevant passages | Relevant to claim | CLASSIFICATION OF THE APPLICATION (Int. Cl.4) |
|---|---|---|---|
| Y | EP - A1 - 0 086 542 (RAGCHUNATH)<br>* Fig. 1-10; abstract * | 1 | G 11 B 23/033 |
| Y | DE - A1 - 3 241 616 (JAMES BURN)<br>* Fig. 1,2; abstract * | 1 | |
| Y | US - A - 3 710 900 (FINK)<br>* Fig. 1; abstract * | 1 | |
| Y | US - A - 3 860 248 (HUNT et al.)<br>* Fig. 1-8; abstract * | 1 | |
| A | DE - A1 - 3 201 487 (EGLY)<br>* Fig. 9; abstract * | 1-5 | |

TECHNICAL FIELDS SEARCHED (Int. Cl.4)

G 11 B 1/00
G 11 B 23/00
B 65 D 85/00
A 45 C 13/00

The present search report has been drawn up for all claims

| Place of search | Date of completion of the search | Examiner |
|---|---|---|
| VIENNA | 29-01-1986 | BERGER |